(19) Europäisches Patentamt
European Patent Office
Office européen des brevets

(11) Veröffentlichungsnummer: **0 386 576 A2**

# (12) EUROPÄISCHE PATENTANMELDUNG

(21) Anmeldenummer: **90103686.3**

(51) Int. Cl.5: **C09K 19/58, C09K 19/32**

(22) Anmeldetag: **26.02.90**

(30) Priorität: **06.03.89 DE 3907095**

(43) Veröffentlichungstag der Anmeldung:
**12.09.90 Patentblatt 90/37**

(84) Benannte Vertragsstaaten:
**BE DE ES FR GB IT NL SE**

(71) Anmelder: **BASF Aktiengesellschaft**
**Carl-Bosch-Strasse 38**
**D-6700 Ludwigshafen(DE)**

(72) Erfinder: **Leyrer, Reinhold J., Dr.**
**Menzelstrasse 4**
**D-6700 Ludwigshafen(DE)**
Erfinder: **Funhoff, Dirk, Dr.**
**Panoramastrasse 3a**
**D-6900 Heidelberg(DE)**
Erfinder: **Ringsdorf, Helmut, Prof. Dr.**
**Kehlweg 41**
**D-6500 Mainz-Gonsenheim(DE)**
Erfinder: **Karthaus, Olaf**
**Kurfuerstenstrasse 4**
**D-6500 Mainz(DE)**
Erfinder: **Wuestefeld, Renate**
**Lion-Feuchtwanger-Strasse 33**
**D-6500 Mainz(DE)**

## (54) Niedermolekulare diskotisch flüssigkristalline Ladungsübertragungs(charge transfer)-Komplexe.

(57) Niedermolekulare diskotisch flüssigkristalline Ladungsübertragungs(charge transfer)-Komplexe aus A) mindestens einer niedermolekularen Verbindung, welche

$a_1$) für sich allein keine flüssigkristalline Phase bildet,

$a_2$) für sich allein eine calamitisch flüssigkristalline Phase bildet oder welche

$a_3$) für sich allein eine diskotisch flüssigkristalline Phase bildet, und

B) mindestens einer niedermolekularen Verbindung mit Elektronendonor- oder Elektronenakzeptorwirkung sowie ihre Verwendung als elektrisch leitende oder photoleitende Materialien und/oder als homogene optisch einachsige Materialien.

EP 0 386 576 A2

## Niedermolekulare diskotisch flüssigkristalline Ladungsübertragungs(charge transfer)-Komplexe

Die vorliegende Erfindung betrifft neue diskotisch flüssigkristalline Phasen, welche von niedermolekularen Verbindungen gebildet werden, die für sich allein keine flüssigkristalline Phasen bilden, für sich allein calamitisch flüssigkristalline Phasen bilden oder für sich allein diskotisch flüssigkristalline Phasen bilden.

Niedermolekulare Verbindungen, welche von ihrer scheibchenförmigen oder angenähert scheibchenförmigen äußeren Form (Diskoide) zur Bildung von diskotisch flüssigkristallinen Phasen befähigt sind, sind beispielsweise aus den folgenden Publikationen bekannt:

- J. Billard, "Discotic Mesophases: A Review", in "Liquid Crystals of One- and Two-Dimensional Order", Editoren, Wittelfrich und Heppke, Springer-Verlag, 1980, Seiten 383 bis 395;
- C. Destrade, P. Foucher, H. Gasparoux, Nguyen Huu Tinh, A.M. Levelut und J. Malthete, "Disc-Like Mesogen Polymorphism", in Molecular Crystals and Liquid Crystals, Band 106, Seiten 121 bis 146, 1980;
- B. Kohne und K. Praefcke, "Hexaalkinylbenzol-Derivate, erste Kohlenwasserstoffe als neuartige kolumnar- oder nematisch-diskotische Flüssigkristalle", in Chimia, Band 41, Seiten 196 bis 198, 1987;
- J.F. van der Pol, E. Neeleman, J.W. Zwikker, R.J.M. Nolte und W. Drenth, "Evidence of an ordered columnar mesophase in peripherally octa-n-alkoxy-substituted phthalocyanines", in Recueil des Travaux Chimiques des Pays-Bas, Band 107, Seiten 615 bis 619, 1988.

Außerdem sind nematisch oder smektisch flüssigkristalline Ladungsübertragungs(charge transfer)-Komplexe beispielsweise aus den Publikationen von

- K. Araya und Y. Matsunaga in Bulletin of the Chemical Society of Japan, Band 53, Seiten 3079 bis 3084, 1980; und in Molecular Crystals and Liquid Crystals, Band 67, Seiten 153 bis 164, 1981;
- D. Demus, G. Pelzl, N.K. Sharma and W. Weissflog in Molecular Crystals and Liquid Crystals, Band 76, Seiten 241 bis 251, 1981;
- W. Weissflog, G. Pelzl und D. Demus in Crystal Research Technology, Band 21, Seiten 117 bis 121, 1986; oder von
- Y. Matsunaga, N. Kamiyama und Y. Nakayasu, in Molecular Crystals and Liquid Crystals, Band 147, Seiten 85 bis 97, 1987;

bekannt.

Des weiteren gehen kristalline Komplexe von 2,4,7-Trinitrofluorenon mit unterschiedlichsten aromatischen Kohlenwasserstoffen aus der Publikation von L.J.E. Hofer und W.C. Peebles in Analytical Chemistry, Band 24, Seiten 822 bis 825, 1952; hervor.

Die Anwendungsmöglichkeiten der bisher bekannten mesogenen, diskotisch flüssigkristalline Phasen bildenden niedermolekularen Verbindungen werden dadurch empfindlich eingeschränkt, daß ihre physikalisch chemischen Eigenschaften, insbesondere ihre Phasenübergänge, d.h. die Existenzbereiche der flüssigkristallinen Phasen, nach ihrer Herstellung festgelegt sind und nicht nachträglich gezielt variiert werden können. Dies ist gerade bei ihrer Verwendung als elektrisch leitende oder photoleitende Materialien sowie als homogene optisch einachsige Materialien ein schwerwiegender Nachteil, weil für jeden speziellen Verwendungszweck eine spezielle mesogene, diskotisch flüssigkristalline Phasen bildende niedermolekulare Verbindung mit angepaßtem Eigenschaftsprofil hergestellt werden muß.

Zwar ist es vom Stand der Technik her bekannt, nematisch oder smektisch flüssigkristalline Ladungsübertragungs(charge transfer)-Komplexe durch die Umsetzung mesogener oder nicht mesogener stäbchenförmiger niedermolekularer Verbindungen mit geeigneten niedermolekularen Verbindungen mit Elektronendonor- oder Elektronenakzeptorwirkung herzustellen, indes läßt sich dem Stand der Technik nichts entnehmen, was darauf hindeutet, daß ein solches Vorgehen auch im Falle der gezielten Erzeugung diskotisch flüssigkristalliner Phasen erfolgreich sein könnte.

Aufgabe der vorliegenden Erfindung ist es, neue niedermolekulare diskotisch flüssigkristalline Phasen zu finden, welche sich aus niedermolekularen Verbindungen herstellen lassen, die für sich allein keine flüssigkristalline Phase bilden, für sich allein eine calamitisch flüssigkristalline Phase bilden oder die für sich allein eine diskotisch flüssigkristalline Phase bilden, und welche die Nachteile des Standes der Technik nicht mehr länger aufweisen, sondern den bekannten niedermole kularen diskotisch flüssigkristallinen Phasen hinsichtlich der Erhältlichkeit, der Anwendungsmöglichkeiten und der gezielten Variation der Phasenübergänge überlegen sind.

Überraschenderweise konnte die Aufgabe der vorliegenden Erfindung dadurch elegant gelöst werden, daß niedermolekulare Verbindungen mit Elektronenakzeptor- oder Elektronendonorwirkung zu niedermolekularen Verbindungen, welche für sich allein keine diskotisch flüssigkristalline Phase bilden müssen, hinzugegeben werden, wodurch neue niedermolekulare diskotisch flüssigkristalline Ladungsübertragungs(charge transfer)-Komplexe mit herausragenden anwendungstechnischen Eigenschaften entstehen.

Gegenstand der vorliegenden Erfindung sind demnach neue niedermolekulare diskotisch flüssigkristalline Ladungsübertragungs(charge transfer)-Komplexe aus

A) mindestens einer niedermolekularen Verbindung, welche

$a_1$) für sich allein keine flüssigkristalline Phase bildet,

$a_2$) für sich allein eine calamitisch flüssigkristalline Phase bildet oder welche

$a_3$) für sich allein eine diskotisch flüssigkristalline Phase bildet, und

B) mindestens einer niedermolekularen Verbindung mit Elektronendonor- oder Elektronenakzeptorwirkung.

Der Kürze halber werden im folgenden die neuen niedermolekularen diskotisch flüssigkristallinen Ladungsübertragungs(charge transfer)-Komplexe als "erfindungsgemäße Komplexe" bezeichnet.

Der eine wesentliche Bestandteil der erfindungsgemäßen Komplexe ist mindestens eine niedermolekulare Verbindung (A). Die niedermolekulare Verbindung (A) muß, um als Bestandteil der erfindungsgemäßen Komplexe verwendet werden zu können, nicht notwendigerweise für sich allein eine diskotisch flüssigkristalline Phase bilden. Im Gegenteil kann sie für sich allein sogar keine flüssigkristalline Phase oder für sich allein eine calamitisch flüssigkristalline Phase bilden. Dagegen ist es erfindungsgemäß wesentlich, daß die niedermolekulare Verbindung (A) nach ihrer Umsetzung mit der niedermolekularen Verbindung (B) mit Elektronendonor- oder Elektronenakzeptorwirkung eine diskotisch flüssigkristalline Phase bildet.

Die Moleküle der erfindungsgemäß zu verwendenden niedermolekularen Verbindungen (A) können stäbchenförmig oder angenähert stäbchenförmig, kugelförmig oder angenähert kugelförmig oder scheibchenförmig oder angenähert scheibchenförmig sein. Bekanntermaßen werden die scheibchenförmigen oder angenähert scheibchenförmigen Verbindungen (A) auch als Diskoide (A) bezeichnet. Erfindungsgemäß sind die Diskoide (A) bevorzugt. Hierbei brauchen die erfindungsgemäß bevorzugten Diskoide (A) für sich allein nicht notwendigerweise eine diskotisch flüssigkristalline Phase zu bilden, sondern sie können für sich allein keine flüssigkristalline Phase oder eine calamitisch flüssigkristalline Phase bilden und trotzdem als wesentlicher Bestandteil (A) der erfindungsgemäßen Komplexe in Betracht kommen.

Erfindungsgemäß sind die Diskoide (A) bevorzugt, welche für sich allein bereits eine diskotisch flüssigkristalline Phase bilden können.

Unabhängig davon, welche niedermolekularen Verbindungen (A) man als Bestandteil der erfindungsgemäßen Komplexe verwendet, haben sie einheitlich entweder eine mehr oder weniger stark ausgeprägte Elektronendonorwirkung oder eine mehr oder weniger stark ausgeprägte Elektronenakzeptorwirkung, wobei niedermolekulare Diskoide (A) mit dieser Eigenschaft erfindungsgemäß vorteilhaft sind. Zusätzliche Vorteile ergeben sich, wenn die Diskoide (A) eine ausgeprägte Elektronendonorwirkung aufweisen.

Demgemäß sind die Diskoide (A) mit mehr oder weniger stark ausgeprägter Elektronenakzeptorwirkung die erfindungsgemäß besonders bevorzugt verwendeten und die Diskoide (A) mit ausgepräger Elektronendonorwirkung die erfindungsgemäß ganz besonders bevorzugt verwendeten Bestandteile (A) der erfindungsgemäßen Komplexe.

Beispiele für die erfindungsgemäß ganz besonders bevorzugt verwendeten Diskoide (A) mit ausgeprägter Elektronendonorwirkung sind die Diskoide (A) der allgemeinen Formeln (I) bis (X).

Beispiele für die erfindungsgemäß besonders bevorzugt verwendeten Diskoide (A) mit mehr oder weniger stark ausgeprägter Elektronenakzeptorwirkung sind die Diskoide (A) der allgemeinen Formel (XI).

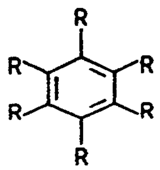

(I)

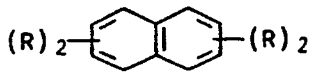

(II)

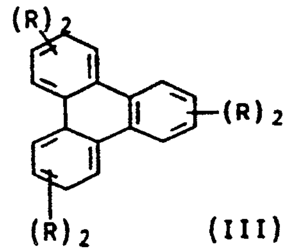

(III)

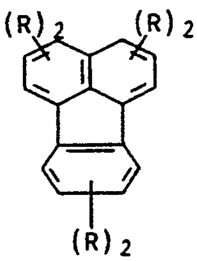

(IV)

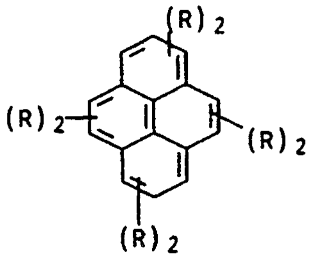

(V)

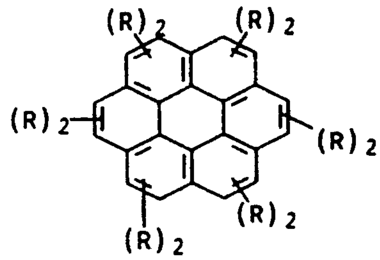

(VI)

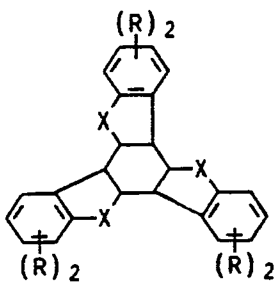

(VII)

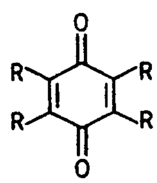

(VIII)

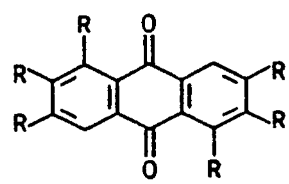

(IX)

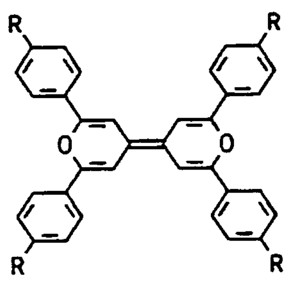

(X)

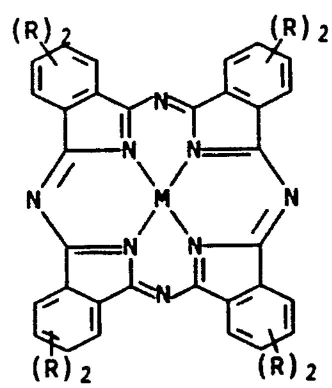

(XI)

Hiervon sind die Diskoide (A) der allgemeinen Formeln (I) und (III) erfindungsgemäß ganz besonders vorteilhaft.

Hierbei bezeichnet die Variable X der allgemeinen Formel (VII) ein Sauerstoff- oder ein Schwefelatom oder eine Imino-, Methylen- oder Carbonylgruppe, und die Variable M der allgemeinen Formel (XI) steht für ein Übergangsmetallkation wie $Cu^{2+}$, $Ni^{2+}$ oder $Fe^{2+}$, ein Hauptgruppenmetallkation wie $Al^{3+}$ oder ein

Titanyl-, Vanadinyl-, $Al(OH)^{2+}$- oder $SiO^{2+}$-Kation.

In den allgemeinen Formeln (I) bis (XI) können die Reste R jeweils gleich oder voneinander verschieden sein. Im allgemeinen handelt es sich bei den Resten R um einwertige, langkettige, flexible oder starre organische Reste. In Ausnahmefällen kann einer der Reste R in den allgemeinen Formeln (I) bis (XI) ein einwertiger kurzkettiger organischer Rest wie beispielsweise ein Acetylrest sein.

Beispiele für geeignete einwertige, langkettige, flexible oder starre organische Reste R für die erfindungsgemäß zu verwendenden Diskoide (A) der allgemeinen Formeln (I) bis (XI) gehen - ebenso wie die Diskoide (A) selbst - aus den eingangs genannten Publikationen von

- J. Billard, "Discotic Mesophases: A Review", in "Liquid Crystals of One- and Two-Dimensional Order", Editoren, Wittelfrich und Heppke, Springer-Verlag, 1980, Seiten 383 bis 395;
- C. Destrade, P. Foucher, H. Gasparoux, Nguyen Huu Tinh, A.M. Levelut und J. Malthete, "Disc-Like Mesogen Polymorphism", in Molecular Crystals and Liquid Crystals, Band 106, Seiten 121 bis 146, 1980;
- B. Kohne und K. Praefcke, "Hexaalkinylbenzol-Derivate, erste Kohlenwasserstoffe als neuartige kolumnar- oder nematisch-diskotische Flüssigkristalle", in Chimia, Band 41, Seiten 196 bis 198, 1987;

und von

- J.F. van der Pol, E. Neeleman, J.W. Zwikker, R.J.M. Nolte und W. Drenth, "Evidence of an ordered columnar mesophase in peripherally octa-n-alkoxy-substituted phthalocyanines", in Recueil des Travaux Chimiques des Pays-Bas, Band 107, Seiten 615 bis 619, 1988,

hervor.

Weitere Beispiele für geeignete einwertige, langkettige, flexible oder starre organische Reste R, welche für die erfindungsgemäß zu verwendenden Diskoide (A) der allgemeinen Formeln (I) bis (XI) in Betracht kommen, werden im Detail in der DE-A-33 34 056 beschrieben.

Beispiele für gut geeignete einwertige, langkettige, flexible oder starre organische Reste R sind

$CH_3-(CH_2)_4-O-$ , $CH_3-(CH_2)_6-O-$ , $CH_3-(CH_2)_{10}-O-$ ,

$CH_3-(CH_2)_4-\overset{O}{C}-O-$ , $CH_3-(CH_2)_6-O-\overset{O}{C}-$ , $CH_3-(CH_2)_{11}-O-\overset{O}{C}-$ ,

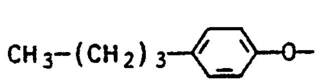 , 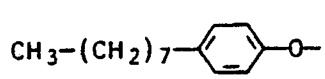 , 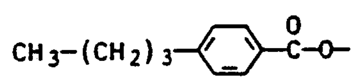 ,

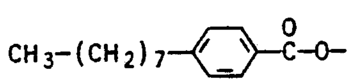 , $C_{12}H_{25}-O-\overset{O}{C}-CH_2-$ , 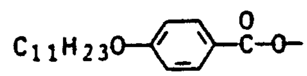 ,

$C_{12}H_{25}-O-CH_2-$ , $CH_3-CH_2-O-\overset{O}{C}-CH_2-O-$ , $CH_3-O-CH_2-CH_2-O-CH_2-CH_2-O-$ ,

$CH_3-(CH_2)_4-C\equiv C-$ , $CH_3-(CH_2)_7-C\equiv C-$ , 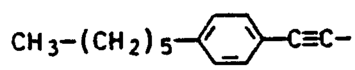 ,

und 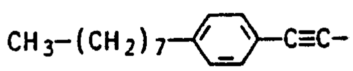 .

Von diesen sind die n-Pentan-1-oxi-, die 1,4,7-Trioxa-oct-1-yl, die 1,4-Dioxa-3-oxo-hexan-1-yl-, die 2-(4'-n-Hexylphen-1-yl)-ethin-1-yl und die 2-(4'-n-Octylphen-1'-yl)-ethin-1-yl-Reste besonders vorteilhaft.

Beispiele für die Diskoide (A), welche erfindungsgemäß ganz besonders bevorzugt als Bestandteile der erfindungsgemäßen Komplexe verwendet werden, sind die Diskoide (A-1) bis (A-4) der allgemeinen Formel (III-a)

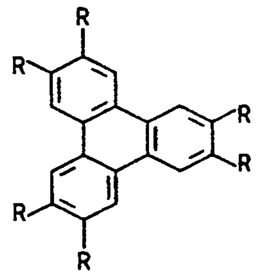

(III-a)

worin die Reste R die folgende Bedeutung haben:
Im Falle von (A-1), $-O-CH_2-CH_2-O-CH_2-CH_2-OCH_3$ (1,4,7-Trioxa-oct-1-yl);
im Falle von (A-2), fünf 1,4,7-Trioxa-oct-1-yl-Reste und ein Acetylrest;
im Falle von (A-3), $-O-(CH_2)_4-CH_3$ (n-Pentan-1-oxi);
im Falle von (A-4),
$-O-CH_2-\overset{O}{\overset{\|}{C}}-O-CH_2CH_3$ (1,4-Dioxa-3-oxo-hexan-1-yl);
und die Diskoide (A-5) und (A-6) der allgemeinen Formel (I),

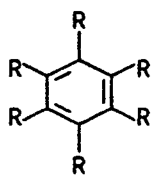

(I)

worin die Reste R die folgende Bedeutung haben:

Im Falle von (A-5), $CH_3-(CH_2)_5-$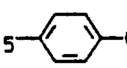$-C{\equiv}C-$ (2-(4'-n-Hexylphen-1'-yl)-ethin-1-yl);

im Falle von (A-6), $CH_3-(CH_2)_7-$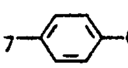$-C{\equiv}C-$ (2-(4'-n-Octylphen-1'-yl)-ethin-1-yl).

Der weitere wesentliche Bestandteil der erfindungsgemäßen Komplexe ist mindestens eine niedermolekulare Verbindung (B) mit entweder Elektronendonor- oder Elektronenakzeptorwirkung. Dies bedeutet, daß die niedermolekularen Verbindungen (B) grundsätzlich in der Lage sind, mit geeigneten Elektronenakzeptoren oder Elektronendonatoren sogenannte Ladungsübertragungs- oder charge transfer-Komplexe zu bilden, wobei selbstredend stets Elektronenakzeptoren (B) mit Elektronendonatoren (A) oder Elektronendonatoren (B) mit Elektronenakzeptoren (A) umgesetzt werden.

Beispiele geeigneter erfindungsgemäß zu verwendender niedermolekularer Verbindungen (B) entstammen den Verbindungsklassen der Aromaten und Heteroaromaten, welche aufgrund ihrer Struktur und Bindungszustände ein ebenes und starres Grundgerüst haben. Hierbei sind die niedermolekularen Verbindungen (B), welche der Verbindungsklasse der Aromaten entstammen, erfindungsgemäß bevorzugt und diejenigen, welche der Unterklasse der mehrkernigen kondensierten Aromaten entstammen besonders bevorzugt. Ob die erfindungsgemäß bevorzugten oder besonders bevorzugten niedermolekularen Verbindungen (B) Elektronendonor- oder Elektronenakzeptorwirkung aufweisen, richtet sich zum einen danach, ob sie elektronenabgebende oder elektronenanziehende Substituenten tragen, und zum anderen danach, wie ausgeprägt die Elektronenakzeptor- oder Elektronendonorwirkung der niedermolekularen Verbindung (A) ist, mit welcher sie umgesetzt werden sollen.

Beispiele geeigneter elektronenabgebender Substituenten für niedermolekulare Verbindungen (B) mit Elektronendonorwirkung sind die vorstehend erwähnten Reste R.

Beispiele geeigneter niedermolekularer Verbindungen (B) mit Elektronendonorwirkung sind demnach Verbindungen der allgemeinen Formeln (I) bis (X), worin die Reste R die vorstehend angegebene Bedeutung haben.

Beispiele geeigneter elektronenanziehender Substituenten sind Halogenatome wie Fluor-, Chlor- und

Bromatome sowie Nitro-, Cyano-, Chinon-, Perfluoralkyl- und Perfluorarylgruppen, von denen die Halogenatome sowie die Nitro-, Cyano- und Chinongruppen besonders gut geeignet sind.

Beispiele geeigneter niedermolekularer Verbindungen (B) mit Elektronenakzeptorwirkung sind demnach mit Halogenatomen und/oder mit Nitro-, Cyano-, Chinon-, Perfluoralkyl- und/oder Perfluorarylgruppen substituierte einkernige sowie mehrkernige kondensierte Aromaten, deren Eigenschaftsprofil durch weitere sonstige Substituenten variiert werden kann.

Weitere Beispiele geeigneter niedermolekularer Verbindungen (B) mit Elektronenakzeptorwirkung sind Verbindungen der allgemeinen Formel (XI), worin alle Reste R die vorstehend angegebene Bedeutung haben.

Beispiele gut geeigneter niedermolekularer Verbindungen (B) mit Elektronenakzeptorwirkung sind Hexafluorbenzol, Hexachlorbenzol, Perfluornaphthalin, Picrylchlorid, Bromtrinitrobiphenyl, Tetracyanochinon, Tetracyanchinodimethan, Tetrachlorperylendicarbonsäurediimid, di-, tri- und tetranitrosubstituierte Anthrachinone sowie di-, tri- und tetranitrosubstituierte Fluorenone und deren Derivate wie 2,4,7-Trinitrofluorenon und 2,4,7-Trinitrofluorenyliden-9-malonsäuredinitril, von denen die beiden letztgenannten niedermolekularen Verbindungen (B) besonders gut geeignet sind und daher die besonders bevorzugten weiteren Bestandteile (B) der erfindungsgemäßen Komplexe darstellen.

Demgemäß sind die erfindungsgemäßen Komplexe, welche die Diskoide (A) mit ausgeprägter Elektronendonorwirkung und die niedermolekularen Verbindungen (B) mit ausgeprägter Elektronenakzeptorwirkung als Bestandteile enthalten, von besonderem Vorteil. Zusätzliche Vorteile ergeben sich, wenn hierbei 2,4,7-Trinitrofluorenon und/oder 2,4,7-Trifluorfluorenyliden-9-malonsäuredinitril als Bestandteile (B) verwendet werden. Ganz besonders vorteilhaft sind diejenigen erfindungsgemäßen Komplexe, welche von den Diskoiden (A-1) bis (A-6) und 2,4,7-Trinitrofluorenon und/oder 2,4,7-Trinitrofluorenyliden-9-malonsäuredinitril (B) gebildet werden.

In den erfindungsgemäßen Komplexen liegen die beiden wesentlichen Bestandteile (A) und (B) in einem Molverhältnis (A):(B) von 1:1 bis 100:1 vor. Es kann in speziellen Fällen von Vorteil sein, das Molverhältnis (A):(B) kleiner als 1:1, beispielsweise 0,99:1 bis 0,1:1, zu wählen. Die zusätzlichen Vorteile, welche sich hierbei für die Bildung diskotisch flüssigkristalliner Phasen ergeben, werden indes in den allermeisten Fällen bereits durch geringere Mengen an Bestandteilen (B) erzielt. Andererseits ist es in speziellen Fällen möglich, das Molverhältnis (A):(B) größer als 100:1, beispielsweise 101:1 bis 2000:1 zu wählen und trotzdem die gewünschte diskotisch flüssigkristalline Phase zu erzeugen. Im allgemeinen empfiehlt es sich aber, den oben angegebenen optimalen Bereich von 1:1 bis 100:1 für das Molverhältnis (A):(B) auszuwählen. Innerhalb dieses optimalen Bereichs sind die Molverhältnisse (A):(B) von 50:1 bis 1:1, vorzugsweise 25:1 bis 1:1 und insbesondere 10:1 bis 1:1 hervorzuheben, weil aufgrund solcher Molverhältnisse (A):(B) besonders vorteilhafte erfindungsgemäße Komplexe mit herausragenden anwendungstechnischen Eigenschaften resultieren.

Demgemäß sind erfindungsgemäße Komplexe eines Molverhältnisses (A):(B) von 10:1 bis 1:1 besonders vorteilhaft.

Methodisch weist die Herstellung der erfindungsgemäßen Komplexe keine Besonderheiten auf, sondern erfolgt durch molekulardisperse Vermischung ihrer wesentlichen Bestandteile (A) und (B) in dem gewünschten Molverhältnis, wobei dies insbesondere in der Schmelze, in der Suspension, in der Emulsion oder in der Lösung durchgeführt wird. Wird die molekulardisperse Vermischung in Lösung durchgeführt, wird ein geeignetes Lösungsmittel oder Lösungsmittelgemisch verwendet, welches beide wesentlichen Bestandteile (A) und (B) der erfindungsgemäßen Komplexe zu lösen vermag. Geeignete Lösungsmittel oder Lösungsmittelgemische können anhand bekannter Löslichkeitsdaten oder aufgrund einfacher Vorversuche ausgewählt werden.

Die erfindungsgemäßen Komplexe weisen zahlreiche besondere unerwartete Vorteile auf. So lassen sie sich in einfacher Weise herstellen, wodurch die Zugänglichkeit niedermolekularer diskotisch flüssigkristalliner Phasen in einem bislang nicht als möglich erachteten Ausmaß verbessert wird. Hierzu sind keinerlei neue und in ihrem Erfolg schwer abschätzbare Synthesen neuer mesogener, diskotisch flüssigkristalline Phasen bildender Verbindungen notwendig, sondern die diskotisch flüssigkristallinen Phasen können gezielt durch einfaches Mischen bereits bekannter, zum Teil im Handel erhältlicher Komponenten, welche für sich allein noch nicht einmal mesogene Eigenschaften haben müssen, erzeugt werden.

Darüber hinaus kann der Existenzbereich der niedermolekularen diskotisch flüssigkristallinen Phasen und ihr Ordnungszustand über die Wahl der Bestandteile (A) und (B) und/oder deren Mischungsverhältnis gezielt eingestellt und dem jeweiligen Verwendungszweck angepaßt werden.

Die erfindungsgemäßen Komplexe weisen mindestens eine diskotisch flüssigkristalline Phase auf, welche beispielsweise

(i) eine Positions- und eine Fernordnung von Kolumnen, deren Moleküle in regelmäßigen oder

unregelmäßigen Abständen übereinander gestapelt sind (z.B. "discotic hexagonal ordered", $D_{ho}$);

(ii) ausschließlich eine Orientierungsfernordnung von Kolumnen, deren Moleküle in regelmäßigen oder unregelmäßigen Abständen übereinader gestapelt sind (z.B. "nematic columnar", $N_C$); oder

(iii) ausschließlich eine Orientierungsfernordnung der einzelnen Diskoide ("discotic nematic", $N_D$); aufweisen kann.

Die erfindungsgemäßen Komplexe können mit Vorteil als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten verwendet werden. Hierzu können die erfindungsgemäßen Komplexe für die genannten Anwendungszwecke mit pleiochroitischen Farbstoffen, Sensibilisatoren, verträglichen Polymeren, Füllstoffen und/oder Verstärkerfüllstoffen vermischt werden, wobei dann die Art und Menge der Zusatzstoffe generell so gewählt wird, daß sie die Bildung und die Stabilität der betreffenden niedermolekularen diskotisch flüssigkristallinen Phase nicht beeinträchtigen.

## Beispiele

In den folgenden Beispielen wurde die Struktur der diskotisch flüssigkristallinen Phasen anhand von Röntgenflachkammeraufnahmen in üblicher und bekannter Weise bestimmt. Hierbei wurde Nickel-gefilterte Cu-$K_\alpha$-Strahlung verwendet.

Die polarisationsmikroskopischen Untersuchungen zur Bestimmung des Phasenübergangsverhaltens wurden in üblicher und bekannter Weise mit Hilfe eines Mikroskops, Marke Ortolux II POL-DK, der Fa. Leitz durchgeführt.

Die differentialkalorimetrischen Messungen zur Bestimmung der Phasenübergangstemperaturen wurden in üblicher und bekannter Weise mittels eines Differentialkalorimeters DSC-4, der Fa. Perkin-Elmer durchgeführt.

## Beispiele 1 bis 23

Herstellung und Eigenschaften der erfindungsgemäßen Komplexe; allgemeine Versuchsvorschrift:

Für die Beispiele 1 bis 23 wurden jeweils Lösungen aus Diskoiden (A) und 2,4,7-Trinitrofluorenon (B) in unterschiedlichen Molverhältnissen hergestellt. Nach vollständiger Umsetzung ihrer wesentlichen Bestandteile (A) und (B) wurden die erfindungsgemäßen Komplexe isoliert und physikalisch charakterisiert.

Hierbei wurde bei den Beispielen 1 bis 4 das Diskoid (A-1), für die Beispiele 5 bis 8 das Diskoid (A-2), für die Beispiele 9 bis 13 das Diskoid (A-3), für die Beispiele 14 bis 18 das Diskoid (A-4) und für die Beispiele 19 bis 23 das Diskoid (A-5) verwendet.

Das Phasenübergangsverhalten der hierbei erhaltenen erfindungsgemäßen Komplexe wird in der Tabelle dem Phasenübergangsverhalten der betreffenden Ausgangsverbindungen (A-1) bis (A-5) gegenübergestellt.

Wie der Vergleich zeigt, können niedermolekulare diskotisch flüssigkristalline Phasen auch von solchen Diskoiden (A) erzeugt werden, welche für sich allein weder eine diskotisch flüssigkristalline noch eine sonstige flüssigkristalline Phase bilden. Darüber hinaus kann der Existenzbereich diskotisch flüssigkristalliner Phasen mit Hilfe der erfindungsgemäßen Komplexe in hervorragender Weise variiert werden.

Tabelle: Das Phasenübergangsverhalten der Diskoide (A-1) bis (A-5) und der hieraus hergestellten erfindungsgemäßen Komplexe

| Bsp. Nr. | Zusammensetzung Verbindung (A) | Verbindung (B) | Molverhältnis (A):(B) | Phasenübergangsverhalten °C |
|---|---|---|---|---|
| | (A-1) | - | | k 52 i |
| 1 | (A-1) | TNF | 5:1 | k 50 $D_{ho}$ 86 i |
| 2 | (A-1) | TNF | 3:1 | k 50 $D_{ho}$ 97 i |
| 3 | (A-1) | TNF | 2:1 | k 40 $D_{ho}$ 120 i |
| 4 | (A-1) | TNF | 1,5:1 | k 20 $D_{ho}$ 93 i |
| | (A-2) | - | | g-28 k* 32 i |
| 5 | (A-2) | TNF | 10:1 | g-29 $D_{ho}$ 95 i |
| 6 | (A-2) | TNF | 5:1 | g-28 k* 47 $D_{ho}$ 117 i |
| 7 | (A-2) | TNF | 3:1 | g-24 k* 46 $D_{ho}$ 128 i |
| 8 | (A-2) | TNF | 2:1 | g-23 k* 47 $D_{ho}$ 128 i |
| | (A-3) | - | | k 69 $D_{ho}$ 122 i |
| 9 | (A-3) | TNF | 20:1 | k 67 $D_{ho}$ 131 i |
| 10 | (A-3) | TNF | 10:1 | k 65 $D_{ho}$ 145 i |
| 11 | (A-3) | TNF | 5:1 | k 61 $D_{ho}$ 181 i |
| 12 | (A-3) | TNF | 2:1 | k n.g. $D_{ho}$ 236 i |
| 13 | (A-3) | TNF | 1:1 | k 58 $D_{ho}$ 232 i |
| | (A-4) | - | | k 122 $D_{ho}$ 172 i |
| 14 | (A-4) | TNF | 10:1 | k 110 $D_{ho}$ 172 i |
| 15 | (A-4) | TNF | 5:1 | g 6 k 110 $D_{ho}$ 177 i |
| 16 | (A-4) | TNF | 3:1 | g 3 $D_{ho}$ 178 i |
| 17 | (A-4) | TNF | 2:1 | g 6 $D_{ho}$ 166 i |
| 18 | (A-4) | TNF | 1:1 | g 13 [k 99 $D_{ho}$ 114 i][a)] |

| Bsp. Nr. | Zusammensetzung Verbindung (A) | Verbindung (B) | Molverhältnis (A):(B) | Phasenübergangsverhalten °C |
|---|---|---|---|---|
| | (A-5) | - | | k 120 $N_D$ 144 i |
| 19 | (A-5) | TNF | 9:1 | k 122 i |
| 20 | (A-5) | TNF | 5:1 | k 110 $D_{ho}$ 114 i |
| 21 | (A-5) | TNF | 3:1 | k 114 $D_{ho}$ 120 i |
| 22 | (A-5) | TNF | 2:1 | k 109 $D_{ho}$ 136 i |
| 23 | (A-5) | TNF | 1:1 | k 58 $D_{ho}$ 156 i |

TNF = 2,4,7-Trinitrofluorenon;
k = kristallin;
k* = kristallin, nur beim ersten Aufheizen zu beobachten;
g = glasartig fest;
i = isotrop geschmolzen;
$D_{ho}$ = hexagonal geordnete diskotisch flüssigkristalline Phase;
$N_D$ = nematisch geordnete diskotisch flüssigkristalline Phase;
[..][a] = zweiphasig;
n.g. = nicht gemessen;

## Ansprüche

1. Niedermolekulare diskotisch flüssigkristalline Ladungsübertragungs(charge transfer)-Komplexe aus
A) mindestens einer niedermolekularen Verbindung, welche
$a_1$) für sich allein keine flüssigkristalline Phase bildet,
$a_2$) für sich allein eine calamitisch flüssigkristalline Phase bildet oder welche
$a_3$) für sich allein eine diskotisch flüssigkristalline Phase bildet, und
B) mindestens einer niedermolekularen Verbindung mit Elektronendonor- oder Elektronenakzeptorwirkung.

2. Niedermolekulare diskotisch flüssigkristalline Ladungsübertragungs(charge transfer)-Komplexe nach Anspruch 1, dadurch gekennzeichnet, daß mindestens eine der niedermolekularen Verbindungen (A) und/oder (B) scheibchenförmig oder angenähert scheibchenförmig (diskoid) ist.

3. Niedermolekulare diskotisch flüssigkristalline Ladungsübertragungs(charge transfer)-Komplexe nach Anspruch 1 oder 2, dadurch gekennzeichnet, daß die niedermolekulare Verbindung (A) Elektronendonor- und die niedermolekulare Verbindung (B) Elektronenakzeptorwirkung hat.

4. Niedermolekulare diskotisch flüssigkristalline Ladungsübertragungs(charge transfer)-Komplexe nach Anspruch 1 oder 2, dadurch gekennzeichnet, daß die niedermolekulare Verbindung (A) Elektronenakzeptor- und die niedermolekulare Verbindung (B) Elektronendonorwirkung hat.

5. Niedermolekulare diskotisch flüssigkristalline Ladungsübertragungs(charge transfer)-Komplexe nach einem der Ansprüche 1 bis 3, dadurch gekennzeichnet, daß die niedermolekulare Verbindung (A) scheibchenförmig oder angenähert scheibchenförmig (diskoid) ist.

6. Niedermolekulare diskotisch flüssigkristalline Ladungsübertragungs(charge transfer)-Komplexe nach Anspruch 5, dadurch gekennzeichnet, daß die niedermolekulare Verbindung (B) eine aromatische Verbindung ist, welche Halogenatome und/oder Nitro-, Cyano- und/oder Chinongruppen aufweist.

7. Niedermolekulare diskotisch flüssigkristalline Ladungsübertragungs(charge transfer)-Komplexe nach Anspruch 6, dadurch gekennzeichnet, daß es sich bei der niedermolekularen Verbindung (B) um 2,4,7-Trinitrofluorenon oder 2,4,7-Trinitrofluorenyliden-9-malonsäuredinitril handelt.

8. Verfahren zur Herstellung diskotisch flüssigkristalliner Phasen, dadurch gekennzeichnet, daß man hierbei
A) mindestens eine niedermolekulare Verbindung, welche
$a_1$) für sich allein keine flüssigkristalline Phase bildet,
$a_2$) für sich allein eine calamitisch flüssigkristalline Phase bildet oder welche
$a_3$) für sich allein eine diskotisch flüssigkristalline Phase bildet, mit
B) mindestens einer niedermolekularen Verbindung mit Elektronendonor- oder Elektronenakzeptorwirkung umsetzt.

9. Verwendung der niedermolekularen diskotisch flüssigkristallinen Ladungsübertragungs(charge transfer)-Komplexe gemäß einem der Ansprüche 1 bis 7 und der gemäß Anspruch 8 hergestellten niedermolekularen diskotisch flüssigkristallinen Ladungsübertragungs(charge transfer)-Komplexe als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten.

Patentansprüche für folgenden Vertragsstaat: ES

1. Verfahren zur Herstellung niedermolekularer diskotisch flüssigkristalliner Ladungsübertragungs(charge transfer)-Komplexe, dadurch gekennzeichnet, daß man hierbei
A) mindestens eine niedermolekulare Verbindung, welche
$a_1$) für sich allein keine flüssigkristalline Phase bildet,
$a_2$) für sich allein eine calamitisch flüssigkristalline Phase bildet oder welche
$a_3$) für sich allein eine diskotisch flüssigkristalline Phase bildet, mit
B) mindestens einer niedermolekularen Verbindung mit Elektronendonor- oder Elektronenakzeptorwirkung umsetzt.

2. Das Verfahren nach Anspruch 1, dadurch gekennzeichnet, daß mindestens eine der niedermolekularen Verbindungen (A) und/oder (B) scheibchenförmig oder angenähert scheibchenförmig (diskoid) ist.

3. Das Verfahren nach Anspruch 1 oder 2, dadurch gekennzeichnet, daß die niedermolekulare Verbindung (A) Elektronendonor- und die niedermolekulare Verbindung (B) Elektronenakzeptorwirkung hat.

4. Das Verfahren nach Anspruch 1 oder 2, dadurch gekennzeichnet, daß die niedermolekulare Verbindung (A) Elektronenakzeptor- und die niedermolekulare Verbindung (B) Elektronendonorwirkung hat.

5. Das Verfahren nach einem der Ansprüche 1 bis 3, dadurch gekennzeichnet, daß die niedermolekulare Verbindung (A) scheibchenförmig oder angenähert scheibchenförmig (diskoid) ist.

6. Das Verfahren nach Anspruch 5, dadurch gekennzeichnet, daß die niedermolekulare Verbindung (B) eine aromatische Verbindung ist, welche Halogenatome und/oder Nitro-, Cyano- und/oder Chinongruppen aufweist.

7. Das Verfahren nach Anspruch 6, dadurch gekennzeichnet, daß es sich bei der niedermolekularen Verbindung (B) um 2,4,7-Trinitrofluorenon oder 2,4,7-Trinitrofluorenyliden-9-malonsäuredinitril handelt.

8. Verfahren zur Herstellung diskotisch flüssigkristalliner Phasen, dadurch gekennzeichnet, daß man hierbei

A) mindestens eine niedermolekulare Verbindung, welche

$a_1$) für sich allein keine flüssigkristalline Phase bildet,

$a_2$) für sich allein eine calamitisch flüssigkristalline Phase bildet oder welche

$a_3$) für sich allein eine diskotisch flüssigkristalline Phase bildet, mit

B) mindestens einer niedermolekularen Verbindung mit Elektronendonor- oder Elektronenakzeptorwirkung umsetzt.

9. Verwendung der gemäß einem der Ansprüche 1 bis 7 hergestellten niedermolekularen diskotisch flüssigkristallinen Ladungsübertragungs(charge transfer)-Komplexe als elektrisch leitende oder photoleitende Materialien und/oder als homogene optisch einachsige Materialien in Dehnungssensoren, elektrophotographischen Aufzeichnungselementen, elektrooptischen Anzeigen, optischen Speicherelementen und laseroptischen Datenplatten.